# EUROPEAN PATENT SPECIFICATION

(11) **EP 1 288 970 B1**
(45) Date of publication and mention of the grant of the patent: **03.11.2010**
(21) Application number: 01121137.2
(22) Date of filing: 04.09.2001
(51) Int. Cl.: H01B 7/295, H01B 7/28, C08K 3/22

(54) **Self-extinguishing cable and flame-retardant composition used therein**
Selbstlöschendes elektrisches Kabel und flammhemmende Zusammensetzung
Cables autoextingibles et compositions ignifuges entrant dans leur composition

(43) Date of publication of application: 05.03.2003
(73) Proprietor: Prysmian S.p.A., 20126 Milano (IT)
(72) Inventor: Tirelli, Diego, 20099 Sesto San Giovanni (MI) (IT); Martinotto, Luca, 20025 Legnano (MI) (IT); Pelizzoni, Andrea, 20030 Seveso (MI) (IT); Peruzzotti, Franco, 20025 Legnano (MI) (IT); Albizzati, Enrico, 28040 Lesa (NO) (IT)
(74) Representative: Checcacci, Giorgio

(56) References cited:
- EP-A- 0 520 752
- US-A- 5 412 012

## Description

The present invention concerns a self-extinguishing cable and the flame-retardant composition used therein. In particular, the invention relates to a self-extinguishing cable having improved insulating properties and to the flame-retardant composition used therein.

Self-extinguishing cables are generally produced by extruding over the core of the cable a flame-retardant coating consisting of a polymer composition which has been given flame retardant properties by the addition of a suitable additive. Polyolefin-based compositions comprising, for example, polyethylene or ethylene/vinyl acetate copolymers, containing an organic halide combined with antimony trioxide as flame-retardant additive can, for example, be used for this purpose. However, halogenated flame-retardant additives have many drawbacks since they partially decompose during processing of the polymer, giving rise to halogenated gases which are toxic to workers and corrode the metal parts of the polymer-processing equipment. In addition, when they are placed directly in a flame, their combustion gives rise to very large amounts of fumes containing toxic gases. Similar drawbacks are encountered when polyvinyl chloride (PVC) with added antimony trioxide is used as base polymer.

Thus, in recent years, use has been made of halogen-free compositions in the production of self-extinguishing cables, in which a polymer base, generally of polyolefin type, is mixed with inorganic flame-retardant fillers, generally hydroxides, hydrated oxides or hydrated salts of metals, in particular of aluminium or magnesium, such as magnesium hydroxide or alumina trihydrate, or mixtures thereof (see, for example, patents US 4,145,404, US 4,673,620, EP-B-328,051 and EP-B-530,940).

Inorganic flame-retardant fillers, generally hydroxides as above noted, can be used as they are or coated with various hydrophobic products since they are usually strongly hygroscopic and this tendency to absorb water, even at the operating conditions of the cable, can cause the loss of the electric insulating characteristics of the coating material; therefore, to reduce hygroscopicity, hydrophobic agents are advantageously used to coat the flame-retardant filler.

Among hydrophobic agents, saturated or unsaturated fatty acids or the salts thereof, in particular oleic, stearic or isostearic acid and the corresponding oleates or stearates, etc. with e.g. zinc, magnesium or aluminium, etc.; or organic silanes such as short chain alkyl- and alkylalkoxy-silanes, or titanium, aluminium and zirconium organic compounds, are known.

For example, WO 96/27885 describes a flame-retardant composition for coating electrical cables, comprising polypropylene as polymer matrix supplemented with 1-20% by weight of a polyethylene wax and 100-200% by weight of magnesium hydroxide coated with a hydrophobic product, for example an alkylsilane. This coating is said to increase the compatibility between the filler and the polymer matrix and at the same time to impart hydrophobic properties to the flame-retardant coating, thus avoiding the absorption of moisture which would reduce the efficiency of the insulating properties of the material.

EP-A-0249010 describes thermoplastic mouldings compounds having high impact strength and high elongation at break, with good fire performance, which are based on polymer blends consisting of a mixture of 1 to 40% by weight of propylene homo- and/or co-polymer, from 0.5 to 5% by weight of ethylene-propylene-diene terpolymer rubber and from 40 to 70% by weight of silane coated magnesium hydroxide and, optionally, polyethylene, polyacrylic ester and polyvinyl acetate homo- and co-polymer.

JP-5-17692 and JP-7-161230 disclose a flame retardant composition endowed with either improved acid resistance or suppressed hygroscopicity, respectively, comprising magnesium hydroxide processed with a surface-treatment agent containing at least one compound selected from fatty acids and the metal salts thereof, silane and titanate coupling agents, the composition being added to a plastic or rubber and being used as a coating material on halogen-free self-extinguishing electric wires and cables.

EP-A-0568488 discloses particulate magnesium hydroxide suitable for use as a flame-retardant additive for a polymer, especially for wires and cables, having peculiar BET surface area and average particle size. Optionally, the particulate magnesium hydroxide may be coated with an agent selected from a fatty acid, a carboxylated unsaturated polymer, an organosilane, e.g. 3-aminopropyltriethoxysilane or vinyl-tris(2-methoxyethoxy)silane, an organotitanate or a salt thereof. The articles formed by mixing particulate magnesium hydroxide with a polymer are said to exhibit optimal properties including flame-retardant effectiveness, tensile strength and percent elongation as well as the dispersability of the particulate magnesium hydroxide in the polymer material.

WO 99/05688 discloses a low smoke, self-extinguishing cable and a halogen-free flame retardant coating used therein wherein natural magnesium hydroxide is used as flame-retardant filler. The coating comprises (a) a crystalline propylene homopolymer or copolymer; (b) a copolymer of ethylene with at least one α-olefin, and optionally with a diene, having a Composition Distribution Index (CDI) greater than 45%; (c) natural magnesium hydroxide. To improve compatibility between magnesium hydroxide and the polymer material, a coupling agent, such as saturated silane compounds or silane compounds containing at least one ethylenic unsaturation, epoxides containing an ethylenic unsaturation, monocarboxylic acids or dicarboxylic acids having at least one ethylenic unsaturation, or derivatives thereof, f.i. anhydrides or esters, may be added to the coating composition. The cable thus obtained exhibits enhanced flexibility, thermocompression resistance and flame-retardant properties.

WO 00/39810 discloses a process for producing self-extinguishing low smoke cables wherein the flame-retardant coating layer is obtained by extruding a flame-retardant composition comprising a polymer base, such as polyethylene, polypropylene, copolymers of ethylene or propylene with α-olefins, copolymers of ethylene with at least one ester chosen from alkyl acrylates, alkyl methacrylates and vinyl carboxylates, natural rubber, butyl rubber or mixtures thereof, an inorganic flame-retardant filler such as hydroxides, hydrated oxides, salts or hydrated salts of calcium, aluminium or magnesium and a dehydrating agent, such as calcium oxide and zeolites. The resulting flame-retardant layer is smooth and uniform and substantially free of pores and succeeds in ameliorating the mechanical properties of the coating. A coupling agent, capable of increasing the interaction between the active groups of the flame-retardant filler and the polymer chains, may be added in order to enhance the compatibility between the filler and the polymer base. This coupling agent can be, for example, a saturated silane compound or a silane compound containing at least one ethylenic insaturation, for instance vinyltris(2-methoxyethoxy)silane.

WO 00/19452 discloses a low smoke, self-extinguishing electrical cable coated with a flame-retardant composition, comprising (a) an ethylene homopolymer or copolymer with an α-olefin or with an ethylenically unsaturated ester, having a density of from 0.905 to 0.970 g/cm³; (b) a copolymer of ethylene with at least one α-olefin, and optionally with a diene, having a density of from 0.860 to 0.904 g/cm³ and a Composition Distribution Index (CDI) greater than 45%; and (c) natural magnesium hydroxide in an amount such as to impart flame-retardant properties; wherein at least one of the polymeric components (a) and (b) contains hydrolyzable organic silane groups grafted onto the polymer chain in order to effectively compatibilize said components with the magnesium hydroxide. The resulting cable shows good tensile properties with excellent flexibility.

Self-extinguishing cables as those described above are usually tested and used in alternating current. Quality control tests in alternating current include measuring the variation of the insulating constant (Ki) after having subjected the cable to an ageing treatment in water at the working temperature.

Unexpectedly, the Applicant has found that common flame retardant coatings which show positive results in ageing tests in water performed in alternating current do not give equally good performances when subjected to analogous ageing tests in water carried out in direct current.

The Applicant has realised that the use of conventional hydrophobic agents, such as fatty acids or short chain silanes, in halogen-free flame retardant compositions gives unsatisfactory results when it is requested to produce self-extinguishing cables able to pass ageing tests in water, particularly in salt containing water, performed in direct current. Such tests are of outstanding importance for some applications where the cables are operated in direct current, such as in the railway field.

Therefore, the Applicant has faced the technical problem of how to produce cables with a flame-retardant, halogen-free coating showing enhanced insulating properties in water or in the presence of a moist environment, not only in alternating current but also in direct current, without adversely affecting self-extinguishing properties.

The Applicant has now found that it is possible to solve the above problem by adding a peculiar organosilane to a flame-retardant composition comprising a polymer base and an inorganic flame-retardant filler as described hereinunder.

In a first aspect, the present invention thus relates to a self-extinguishing cable comprising at least one conductor and at least one flame-retardant coating, wherein the at least one flame-retardant coating comprises:
a) at least one polymer material selected from: olefin homopolymers, olefin copolymers, copolymers of at least one olefin with at least one ethylenically unsaturated ester, polyesters, polyethers, polyether/polyester copolymers, and mixtures thereof;
b) at least one inorganic hydrated flame-retardant filler;
c) at least one silane substituted with at least one C₁₀-C₄₀ hydrocarbon group and with at least one hydrolysable group.

Preferably, the polymer material in the flame-retardant coating of the self-extinguishing cable of the invention is selected from: polyethylene; copolymers of ethylene with at least one α-olefin containing from 3 to 12 carbon atoms, and optionally with at least one diene containing from 4 to 20 carbon atoms; polypropylene; thermoplastic copolymers of propylene with ethylene and/or at least one α-olefin containing from 4 to 12 carbon atoms; copolymers of ethylene with at least one ester selected from alkyl acrylates, alkyl methacrylates and vinyl carboxylates, wherein the alkyl and the carboxylic groups comprised therein are linear or branched, and wherein the linear or branched alkyl group may contain from 1 to 8, preferably from 1 to 4, carbon atoms, while the linear or branched carboxylic group may contain from 2 to 8, preferably from 2 to 5, carbon atoms; and mixtures thereof.

With "α-olefin" it is generally meant an olefin of formula CH₂=CH-R, wherein R is a linear or branched alkyl having from 1 to 10 carbon atoms. The α-olefin can be selected, for example, from propylene, 1-butene, 1-pentene, 4-methyl-1-pentene, 1-hexene, 1-octene, 1-dodecene and the like. Among them, propylene, 1-butene, 1-hexene and 1-octene are particularly preferred.

With "diene" it is generally meant:
a linear, conjugated or non-conjugated diolefin having from 4 to 20 carbon atoms, for example 1,3-butadiene, 1,4-hexadiene or 1,6-octadiene;
a monocyclic or polycyclic diene having from 4 to 20 carbon atoms, for example 1,4-cyclohexadiene, 5-ethylidene-2-norbornene, 5-methylene-2-norbornene, 5-vinyl-2-norbornene.

More preferably, the polymer material is selected from copolymers of ethylene with at least -one α-olefin containing from 3 to 12 carbon atoms, and optionally with at least one diene containing from 4 to 20 carbon atoms, obtained by single-site catalysis.

Preferably, the inorganic hydrated flame-retardant filler is selected from: metal hydroxides, hydrated metal oxides, metal salts having at least one hydroxyl group, and hydrated metal salts; particularly, the flame-retardant filler is a calcium, aluminium, magnesium or zinc hydroxide, hydrated oxide, salt having at least one hydroxyl group or hydrated salt.

In the flame-retardant coating of the self-extinguishing cable of the invention, the C₁₀-C₄₀ hydrocarbon group contained in the silane is preferably a C₁₀-C₄₀, more preferably C₁₂-C₂₄, alkyl, alkenyl, aryl, alkylaryl, arylalkyl, arylalkenyl, alkenylaryl group, whereas the hydrolysable group is preferably a C₁-C₁₆ alkoxy group, optionally substituted by at least one C₁-C₁₆ alkoxy group.

According to a preferred embodiment, the silane may have the following formula:

Y_{4-(x+z)}SiRₓR'_{z} (I)

wherein:
x is 1, 2 or 3; z is zero, 1 or 2; with the proviso that x+z is not higher than 3;
Y, equal or different from each other, are C₁-C₈, preferably C₁-C₄, alkoxy groups, optionally substituted by at least one C₁-C₈, preferably C₁-C₄, alkoxy group;
R, equal or different from each other, are selected from:
   C₁₀-C₄₀, preferably C₁₂-C₂₄, more preferably C₁₄-C₂₀ alkyl groups, optionally substituted by at least one C₆-C₁₄ aryl group;
   C₁₀-C₄₀, preferably C₁₂-C₂₄, more preferably C₁₄-C₂₀ alkenyl groups, optionally substituted by at least one C₆-C₁₄ aryl group;
   C₆-C₁₄, preferably C₆-C₁₀, aryl groups, optionally substituted by at least one C₁-C₃₀ alkyl group and/or by at least one C₂-C₃₀ alkenyl group;
   with the proviso that each of R has from 10 to 40 carbon atoms;
R', equal or different from each other, are selected from:
   hydrogen;
   C₁-C₂₀, preferably C₁-C₁₆, more preferably C₁-C₁₂ alkyl groups, optionally substituted by at least one C₆-C₁₄ aryl group;
   C₂-C₂₀, preferably C₂-C₁₆, more preferably C₂-C₁₂ alkenyl groups, optionally substituted by at least one C₆-C₁₄ aryl group;
   C₆-C₁₄ aryl groups, optionally substituted by at least one C₁-C₂₀ alkyl group and/or by at least one C₂-C₂₀ alkenyl group.

According to a particularly preferred embodiment, in formula (I) x is 1; z is zero; Y, equal or different from each other, are selected from C₁-C₄ alkoxy group, optionally substituted by at least one C₁-C₄ alkoxy group, f.i. methoxy, ethoxy or methoxyethoxy group; R is a C₁₄-C₂₀ alkyl, f.i. hexadecyl or octadecyl group.

In a second aspect, the present invention concerns a flame-retardant composition comprising:
a) at least one polymer material selected from: olefin homopolymers, olefin copolymers, copolymers of at least one olefin with at least one ethylenically unsaturated ester, polyesters, polyethers, polyether/polyester copolymers, and mixtures thereof;
b) at least one inorganic hydrated flame-retardant filler;
c) at least one silane substituted with at least one C₁₀-C₄₀ hydrocarbon group and with at least one hydrolysable group.

Examples of polymer materials that may be used in the self-extinguishing cables and flame-retardant compositions of the invention are: high-density polyethylene (HDPE) (d=0.940-0.970 g/cm³), medium-density polyethylene (MDPE) (d=0.926-0.940 g/cm³), low-density polyethylene (LDPE) (d=0.910-0.926 g/cm³); linear low-density polyethylene (LLDPE) and ultra-low-density polyethylene (ULDPE) (d=0.860-0.910 g/cm³); polypropylene (PP); thermoplastic copolymers of propylene with ethylene; ethylene/vinyl acetate (EVA) copolymers; ethylene/ethyl acrylate (EEA) copolymers, ethylene/butyl acrylate (EBA) copolymers; ethylene/α-olefin rubbers, in particular ethylene/propylene rubbers (EPR), ethylene/propylene/diene rubbers (EPDM); and mixtures thereof.

Copolymers which are particularly preferred are those which can be obtained by copolymerization of ethylene with at least one α-olefin containing from 3 to 12 carbon atoms, and optionally with at least one diene, in the presence of a single-site catalyst, in particular a metallocene catalyst or a constrained geometry catalyst. These copolymers are characterized by a density of between 0.860 and 0.904 g/cm³, preferably from 0.865 to 0.902 g/cm³, and by a Composition Distribution Index (CDI) greater than 45%, said index being defined as the percentage by weight of the copolymer molecules having an α-olefin content of up to 50% of the total average molar content of α-olefin. These copolymers preferably have the following monomer composition: 75-97 mol%, preferably 90-95 mol%, of ethylene; 3-25 mol%, preferably 5-10 mol%, of α-olefin; 0-5 mol%, preferably 0-2 mol%, of a diene. The α-olefin is preferably selected from propylene, 1-butene, 1-hexene and 1-octane. Products of this type are available under the tradenames Engage® from Du Pont-Dow Elastomers and Exact® from Exxon Chemical.

The ethylene copolymers obtained by single-site catalysis are preferably used as a mixture with a crystalline propylene homopolymer or copolymer, as described, for example, in the above mentioned WO 99/05688, or with an ethylene homopolymer or copolymer which has a density of between 0.905 and 0.970 g/cm³, preferably between 0.910 and 0.940 g/cm³, as described, for example, in WO 00/19452 or, alternatively, in US patent 5,707,732. In particular, the polymer material preferably comprises from 5 to 60% by weight, more preferably from 10 to 45% by weight, of a propylene or ethylene homopolymer or copolymer as defined above, and from 40 to 95% by weight, more preferably from 55 to 90% by weight, of an ethylene copolymer obtained by single-site catalysis as defined above, the percentages being relative to the total weight of the polymeric components.

Examples of inorganic hydrated flame-retardant fillers which may be used in the self-extinguishing cables and flame-retardant compositions of the invention are: magnesium hydroxide, alumina trihydrate, hydrated magnesium carbonate, hydrated calcium, magnesium carbonate, 4ZnO.B₂O₃.H₂O, 2ZnO.3B₂O₃.3.5H₂O, or mixtures thereof. Magnesium hydroxide is particularly preferred, since it is characterized by a decomposition temperature of about 340°C and thus allows high extrusion temperatures to be used. It is more particularly preferred to use magnesium hydroxide of natural origin, obtained by grinding minerals based on magnesium hydroxide, such as brucite, as described in WO 99/05688.

The flame-retardant filler is generally used in the form of particles which are untreated or surface-treated with saturated or unsaturated fatty acids containing from 8 to 24 carbon atoms, or metal salts thereof, such as, for example: oleic acid, palmitic acid, stearic acid, isostearic acid, lauric acid; magnesium or zinc stearate or oleate. In order to increase the compatibility with the polymer material, the flame-retardant filler can likewise be surface-treated with suitable coupling agents, for example short chain organic silanes or titanates such as vinyltriethoxysilane, vinyltriacetylsilane, tetraisopropyl titanate and tetra-n-butyl titanate.

The amount of flame-retardant filler to be added is predetermined so as to obtain a cable which is capable of passing flame/fire-propagation tests, particularly those according to standard IEC 332-1 or IEC 332-3 A,B,C. In general, this amount is between 10 and 90% by weight, preferably between 30 and 80% by weight, relative to the total weight of the flame-retardant composition.

The silanes above defined as component c) of the flame-retardant coating of the cable of the invention are preferably in an amount from 0.1% to 10%, preferably 0.5% to 5% by weight with respect to the total weight of the inorganic flame-retardant filler. Examples of silanes which are suitable for the cable and composition of the invention are: hexadecyltrimethoxysilane, hexadecyltriethoxysilane, octadecyltrimethoxysilane and octadecyltriethoxysilane.

A coupling agent capable of increasing the interaction between the active hydroxyl groups of the flame-retardant filler and the polymer chains may be added to the mixture in order to enhance the compatibility between the flame-retardant filler and the polymer material. This coupling agent can be selected from those known in the art, for example: short chain saturated silane compounds or silane compounds containing at least one ethylenic unsaturation; epoxides containing an ethylenic unsaturation; monocarboxylic acids or, preferably, dicarboxylic acids having at least one ethylenic unsaturation, or derivatives thereof, in particular anhydrides or esters.

Examples of short chain silane compounds which are suitable for this purpose are: γ-methacryloxypropyltrimethoxysilane, allyltrimethoxysilane, allyltriethoxysilane, allylmethyldimethoxysilane, allylmethyldiethoxysilane, methyltriethoxysilane, methyltris (2-methoxyethoxy)silane, dimethyldiethoxysilane, vinyltris (2-methoxyethoxy)silane, vinyltrimethoxysilane, vinyl methyldimethoxysilane, vinyltriethoxysilane, octyl triethoxysilane, isobutyltriethoxysilane and isobutyl trimethoxysilane or mixtures thereof.

Examples of epoxides containing an ethylenic unsaturation are: glycidyl acrylate, glycidyl methacrylate, monoglycidyl ester of itaconic acid, glycidyl ester of maleic acid, vinyl glycidyl ether and allyl glycidyl ether or mixtures thereof.

Monocarboxylic or dicarboxylic acids, having at least one ethylenic unsaturation, or derivatives thereof, which can be used as coupling agents are, for example: maleic acid, maleic anhydride, fumaric acid, citraconic acid, itaconic acid, acrylic acid and methacrylic acid, and anhydrides or esters derived from these, or mixtures thereof. Maleic anhydride is particularly preferred.

The coupling agents can be used as they are or pre-grafted onto a polyolefin, for example polyethylene or copolymers of ethylene with an α-olefin, by means of a radical reaction (see for example EP-A-530,940). The amount of pre-grafted coupling agent is generally between 0.05 and 5 parts by weight, preferably between 0.1 and 2 parts by weight, relative to 100 parts by weight of polyolefin. Polyolefins pre-grafted with maleic anhydride are available as commercial products known, for example, under the brand names Fusabond^{®} (Du Pont), Orevac^{®} (Elf Atochem), Exxelor^{®} (Exxon Chemical), Yparex^{®} (DSM), etc.

Alternatively, the coupling agents of carboxylic or epoxide type mentioned above (for example maleic anhydride) or the short chain silanes with ethylenic unsaturation (for example vinyltrimethoxysilane) can be added to the mixture in combination with a radical initiator so as to graft the compatibilizing agent directly onto the polymer material. An organic peroxide such as tert-butyl perbenzoate, dicumyl peroxide, benzoyl peroxide and di-tert-butyl peroxide can, for example, be used as initiator. This method is described, for example, in patent US-4,317,765, in Japanese patent application JP-62-58774 or alternatively in the above mentioned WO 99/05688 and WO 00/19452.

The amount of coupling agent to be added to the mixture can vary mainly depending on the type of coupling agent used and on the amount of flame-retardant filler added, and is generally between 0.01 and 5%, preferably between 0.05 and 2%, by weight relative to the total weight of the polymer material mixture.

Conventional antioxidants which are suitable for this purpose are, for example:
polymerized trimethyldihydroquinoline, 4,4'-thiobis (3-methyl-6-tert-butyl)phenol; pentaerythryl tetra-[3-(3,5-di-tert-butyl-4-hydroxyphenyl)propionate] and 2,2'-thiodiethylene bis[3-(3,5-di-tert-butyl-4-hydroxyphenyl)propionate] or mixtures thereof.

Other fillers which may be used in the present invention include, for example, glass particles, glass fibres, calcined kaolin and talc or mixtures thereof. Processing co-adjuvants usually added to the polymer material are, for example, calcium stearate, zinc stearate, stearic acid, paraffin wax and silicone rubbers or mixtures thereof. Another component that may be added to the flame-retardant composition and cables according to the present invention is at least one dehydrating agent, such as calcium oxide or a zeolite, generally in an amount of from 0.5 to 15% by weight with respect to the weight of the flame retardant filler, as described in the above-mentioned patent application WO 00/39810.

The flame-retardant compositions according to the present invention are preferably used in non-crosslinked form, in order to obtain a coating with thermoplastic properties which is thus recyclable.

The flame-retardant compositions according to the present invention can be prepared by mixing the components a), b) and c) as above defined together with the other additives which may be present according to techniques known in the art, for example using an internal mixer of the type containing tangential rotors (Banbury) or interpenetrating rotors, or in continuous mixers of the Ko-Kneader (Buss) type or of the co-rotating or counterrotating twin-screw type.

As an alternative, the flame-retardant compositions of the invention can be prepared by treating component b) with component c) as above defined and then mixing the resulting mixture with component a) as above defined.

As a further alternative, rather than adding the component c) as above defined during the phase of preparation of the flame-retardant composition, it can be added during the deposition by extrusion of the flame-retardant coating to produce the cable, for example via the extruder hopper or by injection into the extruder cylinder.

The component c) as above defined may be added to the flame-retardant composition as such (usually in the form of a liquid), or supported on a solid inert carrier, or also predispersed in a polymer material, such as one of those described above as component a).

During the extrusion phase, the flame-retardant compositions thus obtained can be used to coat the conductor directly, or to make an outer sheath on the conductor which has been precoated with an insulating layer. When two layers are present, the extrusion can take place in two separate phases, the inner layer being extruded on the conductor in a first passage and the outer layer being extruded on the inner layer in a second passage. Advantageously, the coating process can take place in a single passage, for example by means of the "tandem" technique, in which two .separate extruders arranged in series are used, or alternatively by co-extrusion with a single extrusion head.

The temperature at which the flame-retardant composition is extruded can vary within a wide range and is predetermined as a function of the extrusion rate to be obtained. The extrusion rate in fact depends on the viscosity of the composition in the molten state and thus on its temperature. In turn, the viscosity depends mainly on the type of polymer material and on the type and amount of flame-retardant filler used. The minimum extrusion temperature for the composition is generally not less than the plasticization temperature of the polymer material, while the maximum extrusion temperature is predetermined so as to avoid degradation or decomposition of the polymer material and/or of the flame-retardant filler. Thus, on the basis of the abovementioned criteria, in the case of flame-retardant compositions based on a mixture of polypropylene and ethylene/α-olefin copolymers as described above, in which magnesium hydroxide is used as flame-retardant filler, the temperature at which the flame-retardant composition is extruded is generally between 160°C and 320°C, preferably between 200°C and 280°C.

Some examples of embodiments will now be reported for the purpose of illustrating the present invention more clearly, with particular reference to the accompanying drawings, in which:
Figure 1 is a cross-section of a low voltage cable of the unipolar type according to the invention; -
Figure 2 is a cross-section of another low voltage cable of the unipolar type according to the invention;
- Figure 3 is a cross-section of a low voltage cable of the tripolar type according to the invention.

"Low voltage" generally means a voltage lower than 5 kV, preferably lower than 2 kV, more preferably lower than 1 kV.

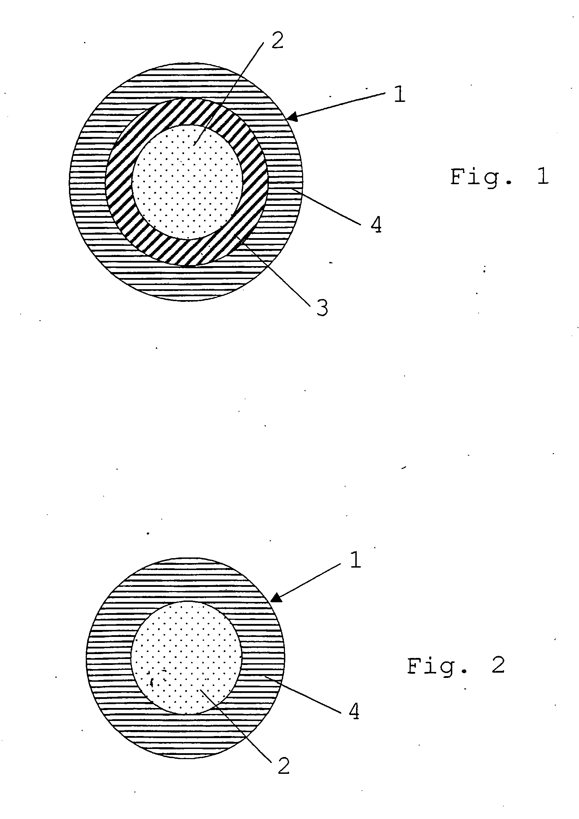

With reference to Figure 1, a self-extinguishing cable (1) of the unipolar type, in particular for low voltage electric energy distribution, comprises: a conductor (2), an inner layer having electric insulating function (3) and an outer layer (4) having the function of a protective sheath with flame retardant properties consisting of the composition according to the present invention.

The inner layer (3) can be made of a polymer material, either cross-linked or non cross-linked, preferably halogen-free, having electric insulation properties. The polymer material can be selected, for instance, from: polyolefins, (omopolymers or copolymers of different olefins), copolymers ethylene/unsaturated esters, polyesters, polyethers, copolymers polyethers/polyesters, and mixtures thereof. Examples of such polymers are: polyethylene (PE), particularly linear low density PE (LLDPE); polypropylene (PP); thermoplastic copolymers propylene/ethylene; elastomeric copolymers ethylene-propylene (EPR) or ethylene-propylene-diene (EPDM); copolymers ethylene/vinylacetate (EVA); copolymers ethylene/methylacrylate (EMA); copolymers ethylene/ ethylacrylate (EEA); copolymers ethylene/butylacrylate (EBA); copolymers ethylene/alpha-olefin. The inner layer (3) may also be a flame-retardant coating obtained e.g. from a flame-retardant composition according to the present invention.

Alternatively, referring to Figure 2, a self-extinguishing cable (1) of the unipolar type, particularly for the distribution of low voltage electric energy, can be made of a conductor (2) directly coated with the flame-retardant composition above described so as to form an outer layer (4) having flame retardant properties, without interposing other insulating layers. In this way, the outer layer (4) works also as electric insulation layer.

A thin polymer layer (not shown in the figures) having an antiabrasive function may also be externally applied.

A pigment may be added to the material forming the outer layer (4) or the antiabrasive layer in order to provide the cable with a specific colouring for identification purposes. Alternatively, the cable can be identified by a thin coloured strip which may be applied externally.

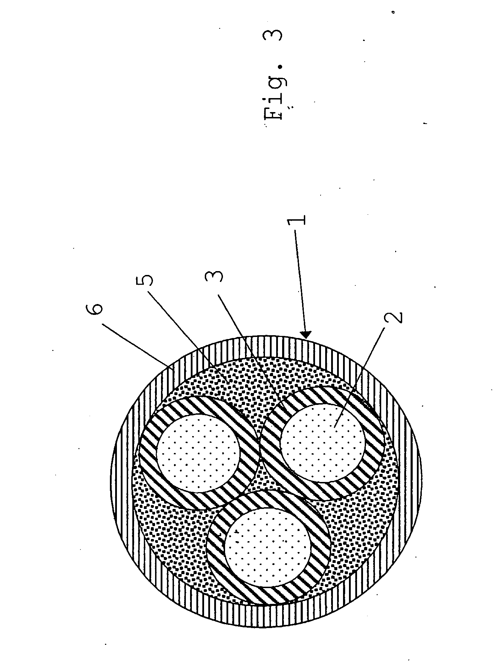

With reference to Figure 3, a self-extinguishing cable (1) of the tripolar type, in particular for the distribution of low voltage electric energy, comprises three conductors (2), each one coated with an insulating layer (3), two of which being the phase conductors, one being the neutral conductor. The insulating layers (3) may consist of an insulating polymer material selected from the ones above indicated. Alternatively, the insulating layers (3) may consist of a common flame retardant composition, or even of a flame retardant composition according to the present invention. The so insulated three conductors (2) are stranded together and the interstices among one conductor and the other are filled with a material (5), preferably having flame retardant properties as well, so as to form a continuous structure having a substantially cylindrical form. An external sheath (6) comprising the flame retardant composition according to the invention is then applied on such a structure.

Figures 1-3 show only some possible embodiments of a cable according to the invention. It is evident that suitable modifications known in the art can be made in those embodiments, but without departing from the scope of the invention. In particular, the flame retardant composition of the invention can also be advantageously used for coating telecommunications or data transmission cables, , including optical fibre cables, or even mixed energy/telecommunications cables.

The following examples are given to illustrate the invention without limiting it.

### EXAMPLE 1

Some accelerated ageing tests in water containing dissolved NaCl were carried out on cable specimens as described hereinbelow.

The following flame-retardant composition was used as a reference (hereinafter: the reference mixture):
85 phr Engage® 8003 - ethylene-octene copolymer obtained by single-site catalysis (Du Pont-Dow Elastomers);
210 phr Hydrofy® G 1.5 - natural magnesium hydroxide, obtained by grinding brucite, not surface-treated (NUOVA SIMA);
0.40 phr Luperox® DC40 - peroxidic initiator: dicumyl peroxide (Atofina);
2.10 phr Silquest® A-172 - coupling agent: vinyltris(2-methoxyethoxy)silane (VTMOEO) (Witco);
15 phr Moplen® EP1X35F - random crystalline propyleneethylene copolymer: d = 0.900 g/cm³; MFI = 9.0 g/10'; T₂ₘ = 154°C; ΔH₂ₘ = 90.6 J/g (Basell);
0.8 phr Irganox® 1010 - antioxidant: pentaerythryl tetrakis[3-(3,5-di-tert-butyl-4-hydroxyphenyl)propionate] (Ciba-Geigy) ;
0.3 phr Irganox® MD1024 - metal deactivator: 1,2-bis(3,5-di-tert-butyl-4-hydroxyhydrocinnamoyl)hydrazine (Ciba-Geigy) ;
6.10 phr Kezadol® GR - calcium oxide predispersed in semicrystalline EPR rubber (80% by weight of CaO), in the form of granules with average diameter 6-7 µm (Kettlitz).

The amounts of the various components are expressed as phr (parts by weight per 100 parts by weight of polymer material).

The above reference mixture was supplemented with hydrophobic additives as reported in Table 1 (the amounts of additives are expressed as % by weight with respect to the weight of flame retardant filler).

The above flame-retardant compositions were prepared by using a Banbury mixer and then deposited by means of a Bandera 45 extruder onto a copper conductor having a 1.5 mm² section, to obtain a cable having a flame-retardant coating of 0.7 mm thickness.

Two separate tests in direct current were carried out on the so obtained cables according to the conditions illustrated herebelow:
(1) cables immersed in a 10 g/l NaCl solution at 60°C; negative pole connected to conductors, positive pole inside the solution; 3 kV direct current, applied for 5 minutes with 2 h intervals.
(2) cables immersed in a 10 g/l NaCl solution at 60°C; negative pole connected to conductors, positive pole inside the solution; 1 kV direct current, applied for 30 minutes with 12 h intervals.

The time (in hours) after which the cables shortcircuited is reported in Table 1 [t₁ for test (1) and t₂ for test (2)].

**TABLE 1**

| SAMPLE | t₁ (h) | t₂ (h) |
|---|---|---|
| REF. MIX.* | 72 | 20 |
| 1* | 120 | 26 |
| 2 | 216 | 50 |
| 3* | 120 | 28 |

| | | |
|---|---|---|
| * = comparative REF. MIX. = reference mixture; 1 = REF. MIX. + 2% by weight of stearic acid; 2 = REF. MIX. + 2% by weight of Dynasylan® 9116 (esadecyltrimethoxy silane) ; 3 = REF. MIX. + 2% by weight of KR TTS (isopropyltriisostearyl titanate). | | |

The results reported in Table 1 show that the time needed to short-circuit the cable specimens changes by varying the test conditions, the performance of cable 2 being remarkably better than that of cables 1 and 3.

### EXAMPLE 2

The test in direct current applying a voltage of 1 kV for 30 minutes every 12 hours, which is closer to the operation conditions of a cable, was repeated using for the flame-retardant coating the same reference mixture of Example 1, by changing either the amount of added VTMOEO or by adding different hydrophobic additives as reported in Table 2 (the amounts of VTMOEO and of hydophobic additives being expressed as % by weight with respect to the filler weight).

**TABLE 2**

| SPECIMEN | VTMOEO (% weight) | HYDROPHOBIC ADDITIVE (% weight) | t (h) |
|---|---|---|---|
| REF. MIX. * | 1.0 | - | 72 |
| 1* | 2.0 | - | 96 |
| 2* | 3.0 | - | 120 |
| 3* | 1.0 | 2.0 STEARIC ACID | 120 |
| 4 | 1.0 | 2.0 DYNASYLAN® 9116 | 216 |

| | | | |
|---|---|---|---|
| * = comparative; REF. MIX. = Reference mixture; 1 = REF. MIX. + 2% VTMOEO; 2 = REF. MIX. + 3% VTMOEO; 3 = REF. MIX. + 2% stearic acid; 4 = REF. MIX. + 2% Dynasylan® 9116; t = 1 kV for 30 min every 12 hours. | | | |

From the above results, it is apparent that the silanes suitable for the cable of the invention, among the tested additives, allow to obtain the best results in direct current; further, it can be noted that such silanes are better than short chain silanes currently used, the amounts thereof being equal.

## Claims

1. Self-extinguishing cable comprising at least one conductor and at least one flame-retardant coating, wherein the at least one flame-retardant coating comprises:
a) at least one polymer material selected from: olefin homopolymers, olefin copolymers, copolymers of at least one olefin with at least one ethylenically unsaturated ester, polyesters, polyethers, polyether/polyester copolymers, and mixtures thereof;
b) at least one inorganic hydrated flame-retardant filler;
c) at least one silane substituted with at least one C₁₀-C₄₀ hydrocarbon group and with at least one hydrolysable group.

2. A cable according to claim 1, wherein the polymer material is selected from:
polyethylene; copolymers of ethylene with at least one α-olefin containing from 3 to 12 carbon atoms, and optionally with at least one diene containing from 4 to 20 carbon atoms; polypropylene; thermoplastic copolymers of propylene with ethylene and/or at least one α-olefin containing from 4 to 12 carbon atoms; copolymers of ethylene with at least one ester selected from alkyl acrylates, alkyl methacrylates and vinyl carboxylates, wherein the alkyl and the carboxylic groups comprised therein are linear or branched, and wherein the linear or branched alkyl group may contain from 1 to 8, preferably from 1 to 4, carbon atoms, while the linear or-branched carboxylic group may contain from 2 to 8, preferably from 2 to 5, carbon atoms; and mixtures thereof.

3. A cable according to claim 2, wherein the linear or branched alkyl group may contain from 1 to 4 carbon atoms, while the linear or branched carboxylic group may contain from 2 to 5 carbon atoms.

4. A cable according to any of the previous claims, wherein the polymer material is selected from copolymers of ethylene with at least one α-olefin containing from 3 to 12 carbon atoms, and optionally with at least one diene containing from 4 to 20 carbon atoms, obtained by single-site catalysis.

5. A cable according to any of the previous claims, wherein the inorganic hydrated flame-retardant filler is selected from: metal hydroxides, hydrated metal oxides, metal salts having at least one hydroxyl group, and hydrated metal salts.

6. A cable according to any of the previous claims, wherein the inorganic hydrated flame-retardant filler is a calcium, aluminium, magnesium or zinc hydroxide, hydrated oxide, salt having at least one hydroxyl group or hydrated salt.

7. A cable according to any of the previous claims, wherein the flame-retardant filler is selected from:
magnesium hydroxide, alumina trihydrate, hydrated magnesium carbonate, hydrated calcium, magnesium carbonate, 4ZnO.B₂O₃.H₂O, 2ZnO.3B₂O₃.3.5H₂O, or mixtures thereof.

8. A cable according to any of the previous claims, wherein the flame-retardant filler is magnesium hydroxide.

9. A cable according to any of the previous claims, wherein the C₁₀-C₄₀ hydrocarbon group contained in the silane is a C₁₀-C₄₀ alkyl, alkenyl, aryl, alkylaryl, arylalkyl, arylalkenyl, alkenylaryl group, whereas the hydrolysable group is a C₁-C₁₆ alkoxy group, optionally substituted by at least one C₁-C₁₆ alkoxy group.

10. A cable according to any of the previous claims, wherein the C₁₀-C₄₀ hydrocarbon group contained in the silane is a C₁₂-C₂₄ alkyl, alkenyl, aryl, alkylaryl, arylalkyl, arylalkenyl, alkenylaryl group.

11. A cable according to any of the previous claims, wherein the silane has the following formula:
Y_{4-(x+z)}SiRₓR' _{z} (I)
wherein:
x is 1, 2 or 3; z is zero, 1 or 2; with the proviso that x+z is not higher than 3;
Y, equal or different from each other, are C₁-C₈ alkoxy groups, optionally substituted by at least one C₁-C₈ alkoxy group;
R, equal or different from each other, are selected from:
C₁₀-C₄₀ alkyl groups, optionally substituted by at least one C₆-C₁₄ aryl group;
C₁₀-C₄₀ alkenyl groups, optionally substituted by at least one C₆-C₁₄ aryl group;
C₆-C₁₄ aryl groups, optionally substituted by at least one C₁-C₃₀ alkyl group and/or by at least one C₂-C₃₀ alkenyl group;
with the proviso that each of R has from 10 to 40 carbon atoms;
R', equal or different from each other, are selected from:
hydrogen;
C₁-C₂₀ alkyl groups, optionally substituted by at least one C₆-C₁₄ aryl group;
C₂-C₂₀ alkenyl groups, optionally substituted by at least one C₆-C₁₄ aryl group;
C₆-C₁₄ aryl groups, optionally substituted by at least one C₁-C₂₀ alkyl group and/or by at least one C₂-C₂₀ alkenyl group.

12. A cable according to any of the previous claims, wherein the silane has the following formula:
Y_{4-(x+z)}SiRₓR'_{z} (I)
wherein:
x is 1, 2 or 3; z is zero, 1 or 2; with the proviso that x+z is not higher than 3;
Y, equal or different from each other, are C₁-C₄ alkoxy groups, optionally substituted by at least one C₁-C₄ alkoxy group;
R, equal or different from each other, are selected from:
C₁₂-C₂₄ alkyl groups, optionally substituted by at least one C₆-C₁₄ aryl group;
C₁₂-C₂₄ alkenyl groups, optionally substituted by at least one C₆-C₁₄ aryl group;
C₆-C₁₀ aryl groups, optionally substituted by at least one C₁-C₃₀ alkyl group and/or by at least one C₂-C₃₀ alkenyl group;
with the proviso that each of R has from 10 to 40 carbon atoms;
R', equal or different from each other, are selected from:
hydrogen;
C₁-C₁₆ alkyl groups, optionally substituted by at least one C₆-C₁₄ aryl group;
C₂-C₁₆ alkenyl groups, optionally substituted by at least one C₆-C₁₄ aryl group;
C₆-C₁₀ aryl groups, optionally substituted by at least one C₁-C₂₀ alkyl group and/or by at least one C₂-C₂₀ alkenyl group.

13. A cable according to any of the previous claims, wherein the silane has the following formula:
Y_{4-(x-z)}SiRₓR'_{z} (I)
wherein:
x is 1, 2 or 3; z is zero, 1 or 2; with the proviso that x+z is not higher than 3;
Y, equal or different from each other, are C₁-C₄ alkoxy groups, optionally substituted by at least one C₁-C₄ alkoxy group;
R, equal or different from each other, are selected from:
C₁₄-C₂₀ alkyl groups, optionally substituted by at least one C₆-C₁₄ aryl group;
C₁₄-C₂₀ alkenyl groups, optionally substituted by at least one C₆-C₁₄ aryl group;
C₆-C₁₀ aryl groups, optionally substituted by at least one C₁-C₃₀ alkyl group and/or by at least one C₂-C₃₀ alkenyl group;
with the proviso that each of R has from 10 to 40 carbon atoms;
R', equal or different from each other, are selected from:
hydrogen;
C₁-C₁₂ alkyl groups, optionally substituted by at least one C₆-C₁₄ aryl group;
C₂-C₁₂ alkenyl groups, optionally substituted by at least one C₆-C₁₄ aryl group;
C₆-C₁₀ aryl groups, optionally substituted by at least one C₁-C₂₀ alkyl group and/or by at least one C₂-C₂₀ alkenyl group.

14. A cable according to any of the claims 11-13, wherein, in formula (I), x is 1; z is zero; Y, equal or different from each other, are selected from C₁-C₄ alkoxy group, optionally substituted by at least one C₁-C₄ alkoxy group; R is a C₁₄-C₂₀ alkyl.

15. A cable according to any of the claims 11-14, wherein, in formula (I), x is 1; z is zero; Y, equal or different from each other, are selected from methoxy, ethoxy or methoxyethoxy group, optionally substituted by at least one methoxy, ethoxy or methoxyethoxy group and R is a hexadecyl or octadecyl group.

16. A cable according to any of the previous claims, wherein the silane is in an amount from 0.1% to 10% with respect to the total weight of the inorganic flame-retardant filler.

17. A cable according to any of the previous claims, wherein the silane is in an amount from 0.5% to 5% by weight with respect to the total weight of the inorganic flame-retardant filler.

18. Flame-retardant composition comprising: a) at least one polymer material; b) at least one inorganic hydrated flame-retardant filler; and c) at least one silane; a), b) and c) being defined according to any of the previous claims.

## Patentansprüche

1. Selbstlöschendes Kabel, umfassend mindestens einen elektrischen Leiter und mindestens eine flammhemmende Beschichtung, wobei die mindestens eine flammhemmende Beschichtung umfasst:
(a) mindestens ein Polymermaterial, ausgewählt aus Olefin-Homopolymeren, Olefin-Copolymeren, Copolymeren von mindestens einem Olefin mit mindestens einem ethylenisch ungesättigten Ester, Polyestern, Polyethern, Polyether/Polyester-Copolymeren und Mischungen davon;
(b) mindestens einen anorganischen, hydratisierten, flammhemmenden Füllstoff;
(c) mindestens ein Silan, das mit mindestens einer C₁₀₋₄₀-Kohlenwasserstoffgruppe und mit mindestens einer hydrolysierbaren Gruppe substituiert ist.

2. Kabel gemäss Anspruch 1, worin das Polymermaterial ausgewählt ist aus:
Polyethylen; Copolymeren von Ethylen mit mindestens einem α-Olefin mit 3 bis 12 Kohlenstoffatomen und gegebenenfalls mindestens einem Dien mit 4 bis 20 Kohlenstoffatomen; Polypropylen; thermoplastischen Copolymeren von Propylen mit Ethylen und/oder mindestens einem α-Olefin mit 4 bis 12 Kohlenstoffatomen; Copolymeren von Ethylen mit mindestens einem Ester, ausgewählt aus Alkylacrylaten, Alkylmethacrylaten und Vinylcarboxylaten, wobei die hierin enthaltenen Alkyl- und Carbonsäuregruppen geradkettig oder verzweigt sind und worin die geradkettige oder verzweigte Alkylgruppe 1 bis 8, vorzugsweise 1 bis 4, Kohlenstoffatome enthalten kann, während die geradkettige oder verzweigte Carbonsäuregruppe 2 bis 8, vorzugsweise 2 bis 5, Kohlenstoffatome enthalten kann; und Mischungen davon.

3. Kabel gemäss Anspruch 2, worin die geradkettige oder verzweigte Alkylgruppe 1 bis 4 Kohlenstoffatome enthalten kann, während die geradkettige oder verzweigte Carbonsäuregruppe 2 bis 5 Kohlenstoffatome enthalten kann.

4. Kabel gemäss irgendeinem der vorhergehenden Ansprüche, worin das Polymermaterial aus Copolymeren von Ethylen mit mindestens einem α-Olefin mit 3 bis 12 Kohlenstoffatomen und gegebenenfalls mit mindestens einem Dien mit 4 bis 20 Kohlenstoffatomen, erhalten durch Einzentren-Katalyse, ausgewählt ist.

5. Kabel gemäss irgendeinem der vorhergehenden Ansprüche, worin der anorganische, hydratisierte, flammhemmende Füllstoff aus Metallhydroxiden, hydratisierten Metalloxiden, Metallsalzen mit mindestens einer Hydroxylgruppe und hydratisierten Metallsalzen ausgewählt ist.

6. Kabel gemäss irgendeinem der vorhergehenden Ansprüche, worin der anorganische, hydratisierte, flammhemmende Füllstoff Calcium-, Aluminium-, Magnesium- oder Zinkhydroxid, hydratisiertes Oxid, ein Salz mit mindestens einer Hydroxylgruppe oder ein hydratisiertes Salz ist.

7. Kabel gemäss irgendeinem der vorhergehenden Ansprüche, worin der flammhemmende Füllstoff aus Magnesiumhydroxid, Aluminiumtrihydrat, hydratisiertem Magnesiumcarbonat, hydratisiertem Calcium, Magnesiumcarbonat, 4ZnO·B₂O_{3·}H₂O, 2ZnO·3B₂O₃·3,5H₂O oder Mischungen davon ausgewählt ist.

8. Kabel gemäss irgendeinem der vorhergehenden Ansprüche, worin der flammhemmende Füllstoff Magnesiumhydroxid ist.

9. Kabel gemäss irgendeinem der vorhergehenden Ansprüche, worin die in dem Silan enthaltene C₁₀₋₄₀-Kohlenwasserstoffgruppe eine C₁₀₋₄₀-Alkyl-, Alkenyl-, Aryl-, Alkylaryl-, Arylalkyl-, Arylalkenyl- oder Alkenylarylgruppe ist, während die hydrolysierbare Gruppe eine C₁₋₁₆-Alkoxygruppe ist, die gegebenenfalls mit mindestens einer C₁₋₁₆-Alkoxygruppe substituiert ist.

10. Kabel gemäss irgendeinem der vorhergehenden Ansprüche, worin die in dem Silan enthaltene C₁₀₋₄₀-Kohlenwasserstoffgruppe eine C₁₂₋₂₄-Alkyl-, Alkenyl-, Aryl-, Alkylaryl-, Arylalkyl-, Arylalkenyl- oder Alkenylarylgruppe ist.

11. Kabel gemäss irgendeinem der vorhergehenden Ansprüche, worin das Silan die folgende Formel hat:
Y_{4-(x+z)}SiRₓR' _{z} (I)
worin:
x 1, 2 oder 3 ist; z 0, 1 oder 2 ist; unter der Voraussetzung dass x + z nicht höher als 3 ist;
Y, gleich oder voneinander verschieden, C₁₋₈-Alkoxygruppen, die gegebenenfalls mit mindestens einer C₁₋₈-Alkoxygruppe substituiert sind, ist;
R, gleich oder voneinander verschieden, ausgewählt ist aus:
C₁₀₋₄₀-Alkylgruppen, gegebenenfalls substituiert mit mindestens einer C₆₋₁₄-Arylgruppe;
C₁₀₋₄₀-Alkenylgruppen, gegebenenfalls substituiert mit mindestens einer C₆₋₁₄-Arylgruppe;
C₆₋₁₄-Arylgruppen, gegebenenfalls substituiert mit mindestens einer C₁₋₃₀-Alkylgruppe und/oder mindestens einer C₂₋₃₀-Alkenylgruppe;
unter der Voraussetzung, dass jedes R 10 bis 40 Kohlenstoffatom hat;
R', gleich oder voneinander verschieden, ausgewählt ist aus:
Wasserstoff;
C₁₋₂₀-Alkylgruppen, gegebenenfalls substituiert mit mindestens einer C₆₋₁₄-Arylgruppe;
C₂₋₂₀-Alkenylgruppen, gegebenenfalls substituiert mit mindestens einer C₆₋₁₄-Arylgruppe;
C₆₋₁₄-Arylgruppen, gegebenenfalls substituiert mit mindestens einer C₁₋₂₀-Alkylgruppe und/oder mindestens einer C₂₋₂₀-Alkenylgruppe.

12. Kabel gemäss irgendeinem der vorhergehenden Ansprüche, worin das Silan die folgende Formel hat
Y_{4-(x+z)}SiRₓR'_{z} (I)
worin:
x 1, 2 oder 3 ist; z 0, 1 oder 2 ist; unter der Voraussetzung dass x + z nicht höher als 3 ist;
Y, gleich oder voneinander verschieden, C₁₋₄-Alkoxygruppen, die gegebenenfalls mit mindestens einer C₁₋₈-Alkoxygruppe substituiert sind, ist;
R, gleich oder voneinander verschieden, ausgewählt ist aus:
C₁₂₋₂₄-Alkylgruppen, gegebenenfalls substituiert mit mindestens einer C₆₋₁₄-Arylgruppe;
C₁₂₋₂₄-Alkenylgruppen, gegebenenfalls substituiert mit mindestens einer C₆₋₁₄-Arylgruppe;
C₆₋₁₀-Arylgruppen, gegebenenfalls substituiert mit mindestens einer C₁₋₃₀-Alkylgruppe und/oder mindestens einer C₂₋₃₀-Alkenylgruppe;
unter der Voraussetzung, dass jedes R 10 bis 40 Kohlenstoffatom hat;
R', gleich oder voneinander verschieden, ausgewählt ist aus:
Wasserstoff;
C₁₋₁₆-Alkylgruppen, gegebenenfalls substituiert mit mindestens einer C₆₋₁₄-Arylgruppe;
C₂₋₁₆-Alkenylgruppen, gegebenenfalls substituiert mit mindestens einer C₆₋₁₄-Arylgruppe;
C₆₋₁₀-Arylgruppen, gegebenenfalls substituiert mit mindestens einer C₁₋₂₀-Alkylgruppe und/oder mindestens einer C₂₋₂₀-Alkenylgruppe.

13. Kabel gemäss irgendeinem der vorhergehenden Ansprüche, worin das Silan die folgende Formel hat
Y_{4-(x+z)}SiRₓR'_{z} (I)
worin:
x 1, 2 oder 3 ist; z 0, 1 oder 2 ist; unter der Voraussetzung dass x + z nicht höher als 3 ist;
Y, gleich oder voneinander verschieden, C₁₋₄-Alkoxygruppen, die gegebenenfalls mit mindestens einer C₁₋₄-Alkoxygruppe substituiert sind, ist;
R, gleich oder voneinander verschieden, ausgewählt ist aus:
C₁₄₋₂₀-Alkylgruppen, gegebenenfalls substituiert mit mindestens einer C₆₋₁₄-Arylgruppe;
C₁₄₋₂₀-Alkenylgruppen, gegebenenfalls substituiert mit mindestens einer C₆₋₁₄-Arylgruppe;
C₆₋₁₀-Arylgruppen, gegebenenfalls substituiert mit mindestens einer C₁₋₃₀-Alkylgruppe und/oder mindestens einer C₂₋₃₀-Alkenylgruppe;
unter der Voraussetzung, dass jedes R 10 bis 40 Kohlenstoffatom hat;
R', gleich oder voneinander verschieden, ausgewählt ist aus:
Wasserstoff;
C₁₋₁₂-Alkylgruppen, gegebenenfalls substituiert mit mindestens einer C₆₋₁₄-Arylgruppe;
C₂₋₁₂-Alkenylgruppen, gegebenenfalls substituiert mit mindestens einer C₆₋₁₄-Arylgruppe;
C₆₋₁₀-Arylgruppenp gegebenenfalls substituiert mit mindestens einer C₁₋₂₀-Alkylgruppe und/oder mindestens einer C₂₋₂₀-Alkenylgruppe.

14. Kabel gemäss irgendeinem der Ansprüche 11 bis 13, wobei in Formel (I) x 1 ist; z 0 ist; Y, gleich oder voneinander verschieden, ausgewählt ist aus einer C₁₋₄-Alkoxygruppe, die gegebenenfalls mit mindestens einer C₁₋₄-Alkoxygruppe substituiert ist; und R C₁₄₋₂₀-Alkyl ist.

15. Kabel gemäss irgendeinem der Ansprüche 11 bis 14, wobei in Formel (I) x 1 ist; z 0 ist; Y, gleich oder voneinander verschieden, ausgewählt ist aus einer Methoxy-, Ethoxy- oder Methoxyethoxygruppe, die gegebenenfalls mit mindestens einer Methoxy-, Ethoxy- oder Methoxyethoxygruppe substituiert ist, und R eine Hexadecyl- oder Octadecylgruppe ist.

16. Kabel gemäss irgendeinem der vorhergehenden Ansprüche, wobei das Silan in einer Menge von 0,1 bis 10 %, in bezug auf das Gesamtgewicht des anorganischen flammhemmenden Füllstoffs, vorliegt.

17. Kabel gemäss irgendeinem der vorhergehenden Ansprüche, wobei das Silan in einer Menge von 0,5 bis 5 Gew.%, in bezug auf das Gesamtgewicht des anorganischen flammhemmenden Füllstoffs, vorliegt.

18. Flammhemmende Zusammensetzung, umfassend: (a) mindestens ein Polymermaterial; (b) mindestens einen anorganischen, hydratisierten, flammhemmenden Füllstoff; und (c) mindestens ein Silan; wobei (a), (b) und (c) wie in irgendeinem der vorhergehenden Ansprüche definiert sind.

## Revendications

1. Câble auto-extinguible comprenant au moins un conducteur et au moins un revêtement ignifuge, dans lequel le au moins un revêtement ignifuge comprend :
a) au moins un matériau polymère choisi parmi : des homopolymères d'oléfine, des copolymères d'oléfine, des copolymères d'au moins une oléfine avec au moins un ester éthyléniquement insaturé, des polyesters, des polyéthers, des copolymères polyéther-polyester, et des mélanges de ceux-ci ;
b) au moins une charge ignifuge hydratée inorganique :
c) au moins un silane substitué par au moins un groupe hydrocarbure en C₁₀-C₄₀ et par au moins un groupe hydrolysable.

2. Câble selon la revendication 1, dans lequel le matériau polymère est choisi parmi :
le polyéthylène ; des copolymères d'éthylène avec au moins une α-oléfine contenant de 3 à 12 atomes de carbone, et éventuellement avec au moins un diène contenant de 4 à 20 atomes de carbone ; le polypropylène ; des copolymères thermoplastiques de propylène et d'éthylène et/ou d'au moins une α-oléfine contenant de 4 à 12 atomes de carbone; des copolymères d'éthylène avec au moins un ester choisl parmi des acrylates d'alkyle, des méthacrylates d'alkyle et des carboxylates de vinyle, où le groupe alkyle et les groupes carboxyliques compris dans ceux-ci sont linéaires ou ramifiés, et où le groupe alkyle linéaire ou ramifié peut contenir de 1 à 8, de préférence de 1 à 4, atomes de carbone, tandis que le groupe carboxylique linéaire ou ramifié peut contenir de 2 à 8, de préférence de 2 à 5, atomes de carbone ; et des mélanges de ceux-ci.

3. Câble selon la revendication 2, dans lequel le groupe alkyle linéaire ou ramifié peut contenir de 1 à 4 atomes de carbone, tandis que le groupe carboxylique linéaire ou ramifié peut contenir de 2 à 5 atomes de carbone.

4. Câble selon une quelconque des revendications précédentes, dans lequel le matériau polymère est choisi parmi des copolymères d' éthylène avec au moins une α-oléfine contenant de 3 à 12 atomes de carbone, et éventuellement avec au moins un diène contenant de 4 à 20 atomes de carbone, obtenus par catalyse à site unique.

5. Câble selon l'une quelconque des revendications précédentes, dans lequel la charge ignifuge hydratée inorganique est choisie parmi : des hydroxydes métalliques, des oxydes métalliques hydratés, des sels métalliques ayant au moins un groupe hydroxyle, et des sels métalliques hydratés.

6. Câble selon l'une quelconque des revendications précédentes, dans lequel la charge ignifuge hydratée inorganique est un hydroxyde, un oxyde hydraté, un sel de calcium, d'aluminium, de magnésium ou de zinc, ayant au moins un groupe hydroxyle ou un sel hydraté.

7. Câble selon l'une quelconque des revendications précédentes, dans lequel la charge ignifuge est choisie parmi : l'hydroxyde de magnésium, le trihydrate d'alumine, le carbonate de magnésium hydraté, le calcium hydraté, le carbonate de magnésium, 4ZnO.B₂O_{3.}H₂O, 2ZnO.3B_{z}O₃.3.5H₂O, ou des mélanges de ceux-ci.

8. Câble selon l'une quelconque des revendications précédentes, dans lequel la charge ignifuge est l'hydroxyde de magnésium.

9. Câble selon l'une quelconque des revendications précédentes, dans lequel le groupe hydrocarbure en C₁₀-C₄₀ contenu dans le silane est un groupe alkyle, alcényle, aryle, alkylaryle, arylalkyle, arylalcényle, alcénylaryle en C₁₀-C₄₀, tandis que le groupe hydrolysable est un groupe alkoxy en C₁-C₁₆, éventuellement substitué par au moins un groupe alkoxy en C₁-C₁₆.

10. Câble selon l'une quelconque des revendications précédentes, dans lequel le groupe hydrocarbure en C₁₀-C₄₀ contenu dans le silane est un groupe alkyle, alcényle, aryle, alkylaryle, arylalkyle, arylalcényle, alcénylaryle en C₁₂-C₂₄.

11. Câble selon l'une quelconque des revendications précédentes, dans lequel le silane a la formule suivante :
Y_{4-(x+z)}SiRₓR'_{z} (I)
dans laquelle :
x est 1, 2 ou 3 ; z est zéro, 1 ou 2 ; à condition que x+z ne soit pas supérieur à 3 ;
Y, identiques ou différents l'un de l'autre, sont des groupes alkoxy en C₁-C₈, éventuellement substitués par au moins un groupe alkoxy en C₁-C₈;
R, identiques ou différents l'un de l'autre, sont choisis parmi :
des groupes alkyle en C₁₀-C₄₀, éventuellement substitués par au moins un groupe aryle en C₆-C₁₄ ;
des groupes alcényle en C₁₀-C₄₀, éventuellement substitués par au moins un groupe aryle en C₆-C₁₄ ;
des groupes aryle en C₆-C₁₄, éventuellement substitués par au moins un groupe alkyle en C₁-C₄₀ et/ou par au moins un groupe alcényle en C₂-C₃₀ ;
à condition que chacun des R ait de 10 à 40 atomes de carbone ;
R', identiques ou différents l'un de l'autre, sont choisis parmi :
l'hydrogène :
des groupes alkyle en C₁-C₂₀, éventuellement substitués par au moins un groupe aryle en C₆-C₁₄ ;
des groupes alcényle en C₂-C₂₀, éventuellement substitués par au moins un groupe aryle en C₆-C₁₄ ;
des groupes aryle en C₆-C₁₄, éventuellement substitués par au moins un groupe alkyle en C₁-C₂₀ et/ou par au moins un groupe alcényle en C₂-C₂₀,

12. Câble selon l'une quelconque des revendications précédentes, dans lequel le silane a la formule suivante :
Y_{4-(x+z)}SiRₓR'_{z} (I)
dans laquelle :
x est 1, 2 ou 3 ; z est zéro, 1 ou 2 ; à condition que x+z ne soit pas supérieur à 3 ;
Y, identiques ou différents l'un de l'autre, sont des groupes alkoxy en C₁-C₄, éventuellement substitués par au moins un groupe alkoxy en C₁-C₄ ;
R, identiques ou différents l'un de l'autre, sont choisis parmi :
des groupes alkyle en C₁₂-C₂₄, éventuellement substitués par au moins un groupe aryle en C₆-C₁₄ ;
des groupes alcényle en C₁₂-C₂₄, éventuellement substitués par au moins un groupe aryle en C₆-C₁₄ ;
des groupes aryle en C₆-Ç₁₀, éventuellement substitués par au moins un groupe alkyle en C₁-C₃₀ et/ou par au moins un groupe alcényle en C₂-C₃₀ ;
à condition que chacun des R ait de 10 à 40 atomes de carbone ;
R', identiques ou différents l'un de l'autre, sont choisis parmi :
l'hydrogène ;
des groupes alkyle en C₁-C₁₆, éventuellement substitués par au moins un groupe aryle en C₆-C₁₄ ;
des groupes alcényle en C₂-C₁₆, éventuellement substitués par au moins un groupe aryle en C₆-C₁₄ ;
des groupes aryle en C₆-C₁₀, éventuellement substitués par au moins un groupe alkyle en C₁-C₂₀ et/ou par au moins un groupe alcényle en C₂-C₂₀.

13. Câble selon l'une quelconque des revendications précédentes, dans lequel le silane a la formule suivante :
Y_{4-(x+z)}SiRₓR'_{z} (I)
dans laquelle :
x est 1, 2 ou 3 ; z est zéro, 1 ou 2 ; à condition que x+z ne soit pas supérieur à 3 ;
Y, identiques ou différents l'un de l'autre, sont des groupes alkoxy en C₁-C₄, éventuellement substitués par au moins un groupe alkoxy en C₁-C₄ ;
R, identiques ou différents l'un de l'autre, sont choisis parmi :
des groupes alkyle en C₁₄-C₂₀, éventuellement substitués par au moins un groupe aryle en C₅-C₁₄ ;
des groupes alcényle en C₁₅-C₂₀, éventuellement substitués par au moins un groupe aryle en C₆-C₁₄ ;
des groupes aryle en C₅-C₁₀, éventuellement substitués par au moins un groupe · alkyle en C₁-C₃₀ et/ou par au moins un groupe alcényle en C₂-C₃₀ ;
à condition que chacun des R ait de 10 à 40 atomes de carbone ;
R', identiques ou différents l'un de l'autre, sont choisis parmi :
l'hydrogène ;
des groupes alkyle en C₁-C₁₂, éventuellement substitués par au moins un groupe aryle en C₆-C₁₄ ;
des groupes alcényle en C₂-C₁₂, éventuellement substitués par au moins un groupe aryle en C₆-C₁₄ ;
des groupes aryle en C₆-C₁₀, éventuellement substitués par au moins un groupe alkyle en C₁-C₂₀ et/ou par au moins un groupe alcényle en C₂-C₂₀.

14. Câble selon l'une quelconque des revendications 11 à 13, dans lequel, dans la formule (I), x est 1 ; z est zéro ; Y, identiques ou différents l'un de l'autre, sont choisis parmi un groupe alkoxy en C₁-C₄, éventuellement substitué par au moins un groupe alkoxy en C₁-C₄ , R est un alkyle en C₁₄-C₂₀.

15. Câble selon l'une quelconque des revendications 11 à 14, dans lequel, dans la formule (I), x est 1 ; z est zéro ; Y, identiques ou différents l'un de l'autre, sont choisis parmi un groupe méthoxy, éthoxy ou méthoxyéthoxy, éventuellement substitué par au moins un groupe méthoxy, éthoxy ou méthoxyéthoxy et R est un groupe hexadécyle ou octadécyle.

16. Câble selon l'une quelconque des revendications précédentes, dans lequel le silane est dans une quantité allant de 0,1 % à 10 % par rapport au poids total de la charge ignifuge inorganique.

17. Câble selon l'une quelconque des revendications précédentes, dans lequel le silane est dans une quantité allant de 0,5 % à 5 % par rapport au poids total de la charge ignifuge inorganique.

18. Composition ignifuge comprenant : a) au moins un matériau polymère ; b) au moins une charge ignifuge hydratée inorganique : et c) au moins un silane ; a), b) et c) étant définis selon l'une quelconque des revendications précédentes.
